# EUROPEAN PATENT APPLICATION

(11) **EP 2 671 532 A1**
(43) Date of publication of application: **11.12.2013**
(21) Application number: 11857697.4
(22) Date of filing: 17.11.2011
(51) Int. Cl.: A61C 1/06, A61C 1/02, A61C 1/12, A61C 8/00

(54) **DENTAL HANDPIECE**

(30) Priority: 31.01.2011 JP 2011018153
(71) Applicant: Nakanishi Inc., Kanuma-shi, Tochigi 322-8666 (JP)
(72) Inventor: MIZUNUMA, Masanori, Kanuma-shi Tochigi 322-8666 (JP); KIMURA, Takao, Kanuma-shi Tochigi 322-8666 (JP); YOKOCHI, Keita, Kanuma-shi Tochigi 322-8666 (JP)
(74) Representative: HOFFMANN EITLE
(86) International application number: PCT/JP2011/006410
(87) International publication number: WO 2012/104946

(57) **Abstract**

There is provided a dental handpiece capable of withstanding a higher torque load. The handpiece comprises a first rotating shaft 3 which is supported rotatably in a rear casing 2R and to which the rotation of a driving source is transmitted, and a second rotating shaft 9 which is supported rotatably in a front casing 2F and to which the rotation of the first rotating shaft 3 is transmitted. A bearing 12 and a bearing 14 are disposed at a predetermined interval in a jacket 8 fixed in the front casing 2F to rotatably support the second rotating shaft 9, and additionally, a bearing 13 is disposed between the bearing 12 and the bearing 14. The third bearing 13 reduces the whirling of the second rotating shaft 9, thereby preventing the wearing and chipping of the teeth of gears caused by a shift of meshing positions between a first gear 5 and a second gear 10 and a shift of meshing positions between a third gear 11 and a fourth gear 73.

## Description

### Technical Field

The present invention relates to a dental handpiece and, more particularly, to a dental handpiece capable of being used for an implant drilling system.

### Background Art

An implant drilling system (hereinafter, referred simply to as an implant) is used for dental treatment such that a bone (bones) or tooth (teeth) is cut and drilled, threads are cut in the drilled hole, or an artificial tooth (teeth) is embedded in and fixed to the hole. The implant comprises a dental handpiece (hereinafter, referred simply to as a handpiece) having a treatment tool for cutting a bone (bones) or tooth (teeth) at the front end thereof, a rotary drive section that is connected to the rear end of the handpiece and has an electric motor for rotating a bar, and a control unit that is connected to the rotary drive section to operate that section. The handpiece for implant is characterized by being used under a high torque condition at a relatively low rotating speed.

For example, a contra-angle handpiece 200 disclosed in Patent Document 1 comprises, as shown in Figure 4, a first rotating shaft 202 rotated by being engaged with an output shaft 201 of an electric motor M, a second rotating shaft 203 tilting with respect to the first rotating shaft 202, a first gear train 204 interposed between the first rotating shaft 202 and the second rotating shaft 203, a tool rotating shaft 205 intersecting at right angles with the second rotating shaft 203, and a second gear train 206 interposed between the second rotating shaft 203 and the tool rotating shaft 205.

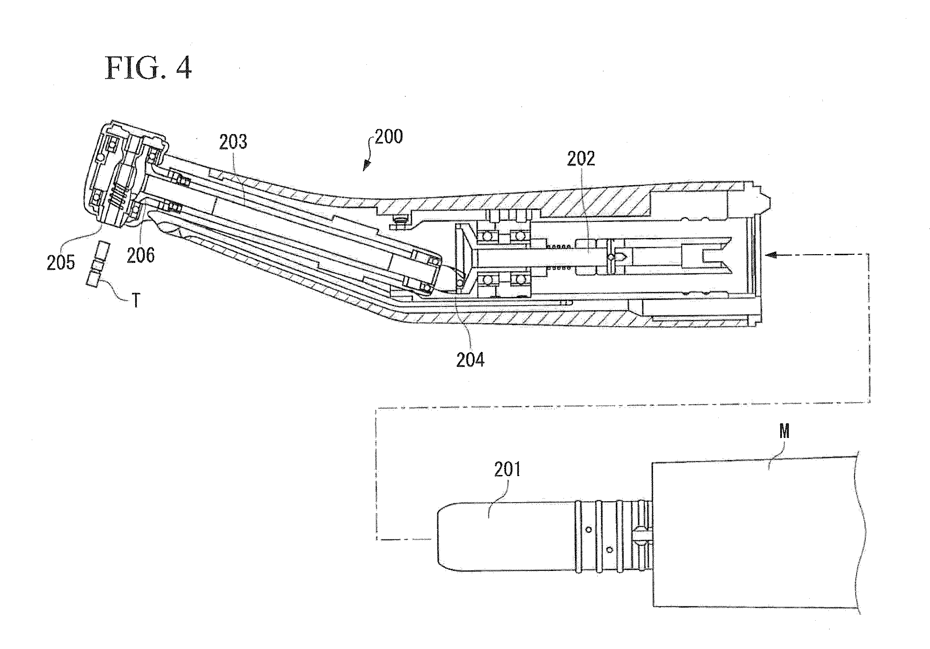

In an application in which the handpiece is required to be rotated at a high speed, to increase the rotating speed of the electric motor, for example, the speed ratio in the first gear train 204 and the second gear train 206 is set at a value of less than 1. The handpiece shown in Figure 4 has been manufactured in harmony with this speed ratio. On the other hand, in an application in which the handpiece is required to be rotated at a low speed, to reduce the rotating speed of the electric motor, for example, the speed ratio in the first gear train is set at a value of more than 1. In the case where a desired rotating speed cannot be given to the treatment tool merely by the speed increase or speed reduction of gear train, a planetary gear mechanism is interposed between the first rotating shaft 202 and the second rotating shaft 203.

### Citation List

### Patent Document

Patent Document 1: Japanese Patent Laid-Open No. 2005-342403

### Summary of Invention

### Technical Problem

As described above, the handpiece for implant is used under the condition that a high torque is applied. Therefore, this handpiece is manufactured so as to endure even if a high torque is applied. Recently, however, the handpiece for implant has been required to withstand a load of a higher torque (for example, 80 N·cm = 0.8 N·m).

Accordingly, an object of the present invention is to provide a handpiece capable of withstanding a load of a higher torque (for example, 0.8 N·m).

### Solution to Problem

The present inventors tested the handpiece under the condition that a higher torque is applied, and resultantly confirmed an abnormality such that the wear of the teeth of two gear trains (corresponding to the first gear train 204 and the second gear train 206) becomes higher than before, and the teeth chip when the driving time becomes long. However, this abnormality has been expected to some extent. This is because if a high torque is applied, a higher load is applied to the gears. Accordingly, the present inventors studied a countermeasure for reducing the teeth wearing and the teeth chipping by increasing the hardness of gear. However, this countermeasure did not achieve an anticipated effect. This fact suggests that only the application of high load to the gear is not a cause for the increase in teeth wearing and the teeth chipping.

To investigate the cause for the increase in teeth wear and the chipping of teeth, the present inventors analyzed the behaviors of some portions of the handpiece that is driven while a high torque is applied. As a result, it was confirmed that the second rotating shaft 203 deflects and whirls (deflects while rotating). The present inventors inferred that since the teeth meshing positions between the gears are shifted by the above-described whirling of the second rotating shaft 203, the teeth wear may increase, and the driving time may lengthen; or, if the shift of meshing positions increases, the teeth may chip. Then, the present inventors observed the behavior of meshing position of teeth, and resultantly came to confirm that, for both of the two gear trains, the meshing positions of teeth shift.

Based on the above-described study results, to prevent the deflection (whirling) of the second rotating shaft 203 during driving, the present inventors tried a test under the condition that a bearing is provided in an intermediate portion of the second rotating shaft 203 and a high torque is applied. As a result, it was revealed that teeth chipping does not occur even if test time of at least four times has elapsed, as compared with the case where no bearing is provided in the intermediate portion.

The dental handpiece of the present invention, which is in view of the above-described findings, is provided with a front casing having a head part which has a tool rotating shaft rotatingly driven in harmony with the rotation transmitted from a driving source, and to which a treatment tool is held detachably, and a rear casing connected slantwise to the front casing.

In the rear casing, a first rotating shaft to which the rotation of the driving source is transmitted is supported rotatably. In the front casing, a second rotating shaft to which the rotation of the first rotating shaft is transmitted is supported rotatably.

The rotation of the first rotating shaft is transmitted to the second rotating shaft via a first gear train, and the rotation of the second rotating shaft is transmitted to the tool rotating shaft via a second gear train.

The second rotating shaft is supported rotatably by first and second bearings. The first and second bearings are disposed at a predetermined interval in the front casing.

A feature of the handpiece of the present invention is that a third bearing is disposed between the first and second bearings that support the second rotating shaft.

In the present invention, the third bearing reduces the whirling of the second rotating shaft, thereby preventing the increase in wear and the chipping of teeth in the first and second gear trains.

In the present invention, the effect of reducing the whirling due to the disposition of the third bearing can be achieved even if the third bearing is disposed at any position between the first and second bearings. However, according to the observation of handpiece behavior made by the present inventors, taking the distance between the support points of the second rotating shaft, which distance is defined by the first bearing and the second bearing, as L, the whirling (deflection) becomes at a maximum at a position of 1/2L. Also, if the third bearing is disposed just close to the first gear train, the distance between the third bearing and the second bearing becomes long, so that the second rotating shaft is liable to whirl. Similarly, if the third bearing is disposed just close to the second gear train, the distance between the third bearing and the first bearing becomes long, so that the second rotating shaft is liable to whirl. Considering these phenomena, the third bearing in the present invention is preferably disposed at a position selected from the range of 1/4L to 3/4L from the support point of the first bearing. Herein, it is assumed that the first bearing is disposed on the side close to the first gear train.

As described before, the handpiece of the present invention is suitable as a handpiece for implant. This handpiece reduces the rotating speed of a motor, which is the driving source. Therefore, the present invention is preferably applied to a handpiece in which the first gear train transmits the rotation of the first rotating shaft to the second rotating shaft so that the rotating speed of the first rotating shaft is reduced, and further the second gear train transmits the rotation of the second rotating shaft to the tool rotating shaft so that the rotating speed of the second rotating shaft is reduced.

### Advantageous Effect of Invention

According to the present invention, by disposing the third bearing between the first and second bearings that support the second rotating shaft, the whirling of the second rotating shaft is reduced, thereby preventing the increase in wear and the chipping of teeth in the first and second gear trains. Therefore, even if being used under the condition that a high torque is applied, the handpiece of the present invention ensures sufficient durability.

### Brief Description of Drawings

Figure 1 is a longitudinal sectional view of a handpiece in accordance with an embodiment of the present invention.

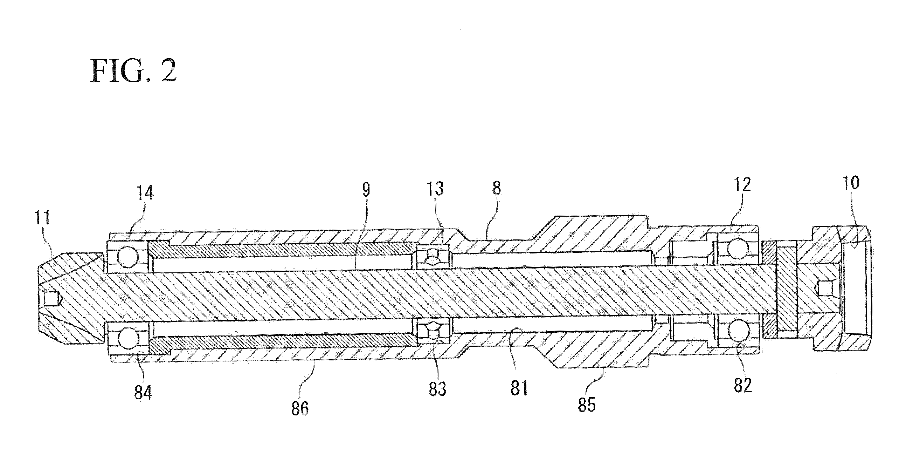

Figure 2 is a longitudinal sectional view of a jacket of the handpiece shown in Figure 1.
Figure 3 is schematic views showing a part of a handpiece in accordance with an embodiment of the present invention, Figure 3A showing the whirling of a second rotating shaft supported by bearings (a first bearing and a second bearing) provided in both end portions, Figure 3B showing the whirling of the second rotating shaft in the case where a third bearing is disposed near the first bearing, and Figure 3C showing the whirling of the second rotating shaft in the case where a third bearing is disposed near the second bearing.
Figure 4 is a longitudinal sectional view of a conventional handpiece.

### Description of Embodiment

The present invention will now be described in detail based on an embodiment shown in the accompanying drawings.

A dental handpiece 100 in accordance with this embodiment has a grip part 1 having a head part 7 to which a treatment tool T is detachably attached in a front end portion thereof.

The grip part 1 has a cylindrical casing 2, and the casing 2 is constituted by a front casing 2F and a rear casing 2R. The front casing 2F and the rear casing 2R are connected to each other at a predetermined tilt angle, and therefore the handpiece 100 is a contra-angle handpiece.

### <Configuration of rear casing 2R>

In the rear casing 2R, a first rotating shaft 3 is rotatably supported via a bearing 4. On the rear end side of the first rotating shaft 3, a connecting part 30 engageable with the output shaft of a motor, not shown, which is a driving source, is provided. On the other hand, on the front end side of the first rotating shaft 3, a first gear 5 is provided. The first gear 5 comprises a base part 51 connected to the first rotating shaft 3 via a planetary gear mechanism 15 and a teeth part 52 formed at the front end of the base part 51. The front and rear ends of the base part 51 are supported rotatably via a pair of bearings 6 fixed in the rear casing 2R. Thereby, when the rotation of the output shaft is transmitted via the connecting part 30, the teeth part 52 is rotated at a speed lower than the speed of the motor.

In the handpiece 100 of the present invention, the side on which the head part 7 is provided is taken as the front side, and the side on which the motor is connected is taken as the rear side.

### <Configuration of front casing 2F>

In the front casing 2F, a jacket 8 is fixed by fitting. The jacket 8 extends from the outer peripheral surface of the head part 7 toward the first gear 5. The jacket 8, which is produced as a unit separate from the front casing 2F, is a hollow, cylindrical member, and is provided with a shaft penetrating hole 81 through which a second rotating shaft 9 penetrates, and three bearing accommodating parts 82, 83 and 84. In the outer peripheral portion of the jacket 8, two large-diameter parts 85 and 86 are provided, and the jacket 8 is fixed by pushing the two large-diameter parts 85 and 86 against the inner wall of the front casing 2F. The jacket 8 is inserted from the rear end of the front casing 2F in the state in which the second rotating shaft 9 is mounted.

### <Second rotating shaft 9>

The second rotating shaft 9 is supported rotatably in the front casing 2F via the jacket 8. The second rotating shaft 9 is provided so as to penetrate through the jacket 8, and the portion thereof protruding from the rear end side is formed with a second gear 10, and the portion thereof exposed from the front end side is formed with a third gear 11.

The second gear 10 of the second rotating shaft 9 meshes with the first gear 5, and thereby the rotation of the first rotating shaft 3 is transmitted to the second rotating shaft 9. In a gear train (first gear train) consisting of the first gear 5 and the second gear 10, the first gear 5 internally touches the second gear 10, which is an internal gear having a larger number of teeth, so that the rotating speed of the second rotating shaft 9 is made lower than that of the first rotating shaft 3.

The third gear 11 of the second rotating shaft 9 meshes with a fourth gear 73 provided in the head part 7, and thereby the rotation of the second rotating shaft 9 is transmitted to a tool rotating shaft 72 of the head part 7. In a gear train (second gear train) consisting of the third gear 11 and the fourth gear 73, since the third gear 11 has a smaller number of teeth, the rotating speed of the tool rotating shaft 72 is made lower than that of the second rotating shaft 9.

In the handpiece 100, the driving force of the motor (output shaft) is transmitted to the head part 7 via the first rotating shaft 3 and the second rotating shaft 9 as described above, whereby the treatment tool T is driven.

The second rotating shaft 9 is supported rotatably in the jacket 8 (the front casing 2F) by bearings 12, 13 and 14 accommodated in the bearing accommodating parts 82, 83 and 84, respectively. A feature of this embodiment is that the second rotating shaft 9 is supported by the three bearings 12, 13 and 14, and especially, the bearing 13 is disposed in an intermediate portion in the axial direction of the second rotating shaft 9. In the following, this feature is explained.

If the second rotating shaft 9 is merely supported rotatably, the use of the two bearings, i.e., the bearing 12 (a first bearing) and the bearing 14 (a second bearing) suffices. However, if the handpiece 100 is used continuously under the condition that a high torque is applied to the tool rotating shaft 72 of the head part 7, wear is high, and the gear teeth come to chip as described above. According to the study conducted by the present inventors, the cause for teeth chipping is that the second rotating shaft 9 deflects while rotating, that is, whirls, so that the teeth meshing positions between the first gear 5 and the second gear 10 are shifted greatly. To prevent this deflection, in the handpiece 100, the bearing 13 (a third bearing) is disposed in an intermediate portion of the second rotating shaft 9. A role in mechanically supporting The second rotating shaft 9 is mechanically supported by the two bearings 12 and 14, and the bearing 13 has only to prevent the whirling of the second rotating shaft 9. Therefore, as the bearing 13, a small-sized bearing that withstands low loads as compared with the bearings 12 and 14 can be used.

### <head part 7>

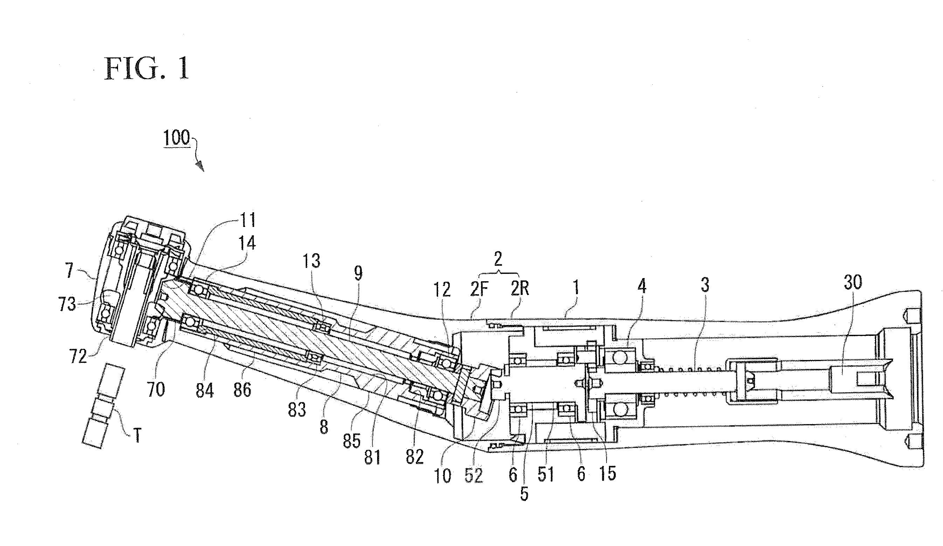

As shown in Figure 1, the head part 7 has the tool rotating shaft 72, and the configuration is made such that the treatment tool T is detachably attached to the tool rotating shaft 72. Around the tool rotating shaft 72, the fourth gear 73 is formed. The fourth gear 73 meshes with the third gear 11 of the second rotating shaft 9, whereby the rotation of the second rotating shaft 9 is transmitted to the tool rotating shaft 72. The third gear 11 and the fourth gear 73 constitute the second gear train. In this embodiment, the number of teeth of the fourth gear 73 is set larger than the number of teeth of the third gear 11. Therefore, the rotation of the second rotating shaft 9 is transmitted to the tool rotating shaft 72 via the second gear train so that the rotating speed is reduced.

The head part 7 has an opening 70. The third gear 11 passes through this opening 70 and meshes with the fourth gear 73 of the tool rotating shaft 72.

### <Operation and Effect>

In the handpiece 100 described above, the rotation of the electric motor (not shown), which is the driving source, is transmitted to rotate the first rotating shaft 3, and the rotation of the first rotating shaft 3 is transmitted to the second rotating shaft 9 via the planetary gear mechanism 15 and the first and second gears 5 and 10 constituting the first gear train. Further, the rotation of the second rotating shaft 9 is transmitted to the tool rotating shaft 72 via the third gear 11 and the fourth gear 73 constituting the second gear train, whereby the treatment tool T is rotated, and thereby dental treatment including implantation is performed.

Even if a high torque is applied to the treatment tool T during this treatment, since the second rotating shaft 9 is supported by the bearings 12 and 14, and additionally is supported by the bearing 13 in an almost middle point of the second rotating shaft 9, whirling does not occur on the second rotating shaft 9, or if occurred, the whirling is slight. Therefore, the second gear 10 meshes with the first gear 5 properly, and the fourth gear 73 meshes with the third gear 11 properly. Resultantly, even if the handpiece 100 is used under a high torque, the teeth chipping of the first gear 5 to fourth gear 73 can be prevented.

### <Position at which bearing 13 is disposed>

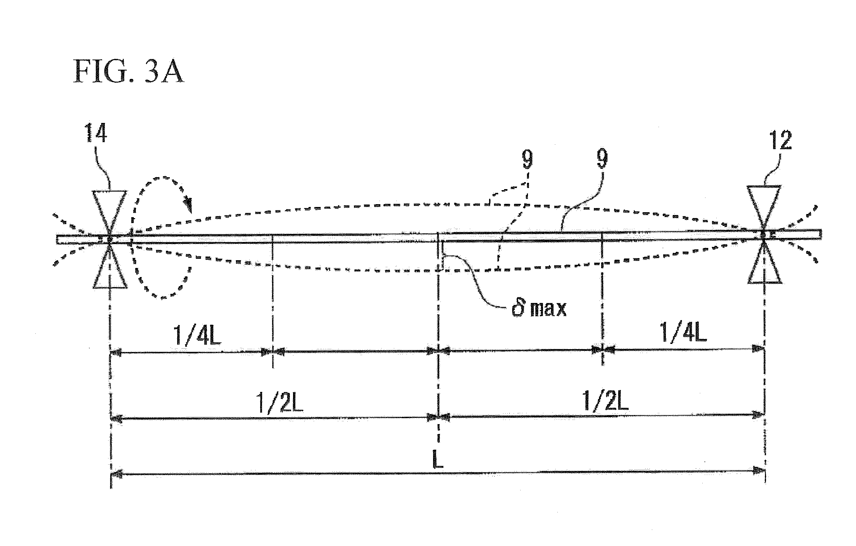

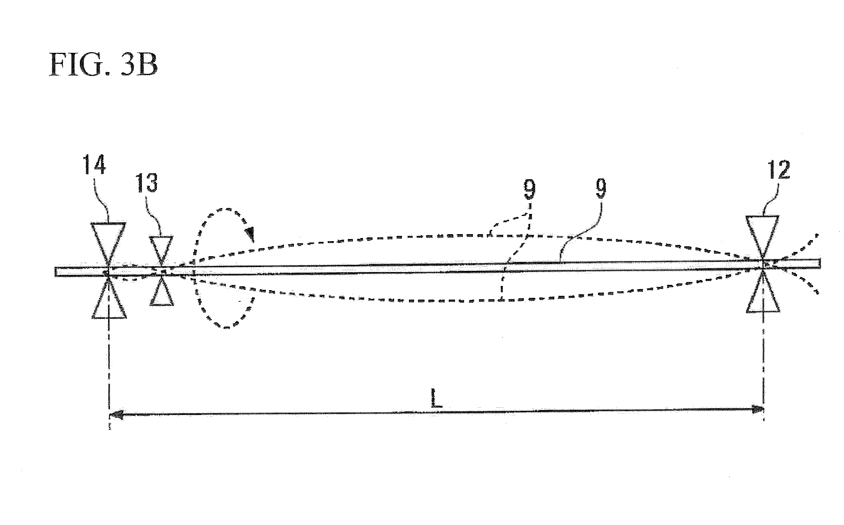

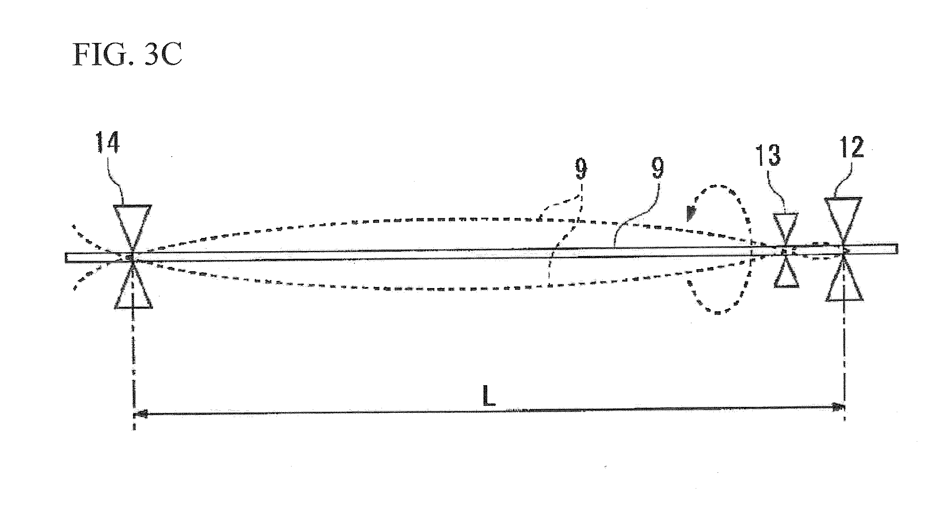

In the above-described embodiment, the bearing 13 is disposed at an almost middle point between the bearing 12 and the bearing 14. Although this disposition is a preferred mode in the present invention, the present invention is not limited to this disposition. The reason for this is explained with reference to Figure 3.

Figure 3A shows a state in which the second rotating shaft 9, which is supported by the bearing 12 (the first bearing) and the bearing 14 (the second bearing) in portions near both ends of the shaft, whirls. In the figure, a curve (reference sign 9) indicated by a broken line indicates the whirling second rotating shaft 9. As shown in Figure 3A, taking the distance between the support points of the second rotating shaft 9, which distance is defined by the bearing 12 and the bearing 14, as L, the maximum whirling amount (deflection amount) δmax of the second rotating shaft 9 is produced at a position of 1/2L. The disposition of the bearing 13 (the third bearing) at a position at which the whirling amount is large is most effective in reducing the whirling of the second rotating shaft 9. Therefore, it is most effective to dispose the bearing 13 at the 1/2L position at which the maximum whirling amount δmax is produced. However, in the case where a relatively low torque in the high torque is applied, the whirling amount also becomes small. Therefore, it is apparent that by disposing the bearing 13 between the bearing 12 and the bearing 14, not limited to at the 1/2L position, the whirling of the second rotating shaft 9 can be reduced to such a degree that the meshing of the first gear 5 with the second gear 10 and the meshing of the third gear 11 with the fourth gear 73 are not hindered.

Next, if the bearing 13 (the third bearing) is disposed near the bearing 14 (the second bearing) as shown in Figure 3B, the whirling of the second rotating shaft 9 scarcely occurs between the bearing 14 and the bearing 13, but the whirling of a considerable amount of the second rotating shaft 9 occurs between the bearing 13 and the bearing 12.

Also, if the bearing 13 (the third bearing) is disposed near the bearing 12 (the first bearing) as shown in Figure 3C, the whirling of the second rotating shaft 9 scarcely occurs between the bearing 12 and the bearing 13, but the whirling of a considerable amount of the second rotating shaft 9 occurs between the bearing 13 and the bearing 14.

Considering the above-described fact, the bearing 13 is preferably disposed at a position selected from the range of 1/4L to 3/4L from the support point of the bearing 12 (the first bearing).

The shift of meshing positions may occur in the first gear train (between the first gear 5 and the second gear 10) and the second gear train (between the third gear 11 and the fourth gear 73). Both of the first gear train and the second gear train involve speed reduction. The second gear 10 has a larger number of teeth than the first gear 5, and the fourth gear 73 has a larger number of teeth than the third gear 11. Since the diameter of the second rotating shaft 9 used for the dental handpiece 100 is originally restricted to about 2 to 3 mm, the sizes of the teeth constituting the first gear 5 to the fourth gear 73 are also minute. Therefore, it can be said that for the second gear 10 and the fourth gear 73 having a large number of teeth, the teeth are liable to chip as compared with the first gear 5 and the third gear 11 because the second gear 10 and the fourth gear 73 have an insufficient strength. If the second gear 10 is caused to have a higher strength than that of the third gear 11, the teeth of the third gear 11 are more liable to chip. Inversely, if the third gear 11 is caused to have a higher strength than that of the second gear 10, the teeth of the second gear 10 are more liable to chip. From this point of view, it is preferable that the bearing 13 (the third bearing) be disposed close to the side of either of the second gear 10 or the third gear 11 in which the teeth strength is low in the range of 1/4L to 3/4L. The teeth strength can be identified by the allowable torque or the allowable transmission power.

### <Bearing type>

In the above explanation, all of the bearings 12, 13 and 14 are ball bearings supporting a shaft in the radial direction. However, a slide bearing can be used as the bearing of the present invention, or a ball bearing and a slide bearing can be used in combination. As one example, the combination can be such that the bearings 12 and 14 that dedicatedly support the load of the second rotating shaft 9 are made ball bearings, and the bearing 13 is made a slide bearing. The same is true for other bearings 4 and 6.

### <Axial length of bearing>

For the bearing 13 for reducing the whirling of the second rotating shaft 9, with an increase in axial length thereof, the effect becomes remarkable. On the other hand, however, even if a ball bearing is used, the bearing 13 becomes a resistance against the rotation of the second rotating shaft 9. This resistance increases as the axial length of the bearing 13 becomes large. Therefore, the axial length of the bearing 13 should be determined by comparingly considering the reduction in whirling and the resistance against rotation.

The above is an explanation of the handpiece 100 in accordance with this embodiment. The modes of the casing 2 (the front casing 2F, the rear casing 2R), the first rotating shaft 3, and the like, and the support mode of the first rotating shaft 3 are only exemplified ones, and do not restrict the present invention.

Also, the transmission of rotation from the first rotating shaft 3 to the second rotating shaft 9, and the transmission of rotation from the second rotating shaft 9 to the tool rotating shaft 72 may be indirect or direct.

Further, the handpiece 100 in accordance with this embodiment comprises the planetary gear mechanism 15 between the first rotating shaft 3 and the first gear 5. However, the planetary gear mechanism 15 is an optional component in the present invention. Even if the planetary gear mechanism 15 is provided, the position thereof is not limited to between the first rotating shaft 3 and the first gear 5.

Besides, the configurations in the above-described embodiment can be selected, or can be changed to any other configuration as appropriate without departing from the gist of the present invention.

### Reference Signs List

- 100: handpiece
- 1: grip part
- 2: casing
- 2F: front casing
- 2R: rear casing
- 3: first rotating shaft
- 5: first gear (first gear train)
- 7: head part
- 72: tool rotating shaft
- 73: fourth gear (second gear train)
- 9: second rotating shaft
- 10: second gear (first gear train)
- 11: third gear (second gear train)
- 12: bearing (first bearing)
- 13: bearing (third bearing)
- 14: bearing (second bearing)

## Claims

1. A dental handpiece comprising:
a front casing having a head part which has a tool rotating shaft rotatingly driven in harmony with the rotation transmitted from a driving source, and to the head part a treatment tool is held detachably;
a rear casing connected slantwise to the front casing;
a first rotating shaft which is supported rotatably in the rear casing, and to which the rotation of the driving source is transmitted;
a second rotating shaft which is supported rotatably in the front casing, and to which the rotation of the first rotating shaft is transmitted;
a first gear train for transmitting the rotation of the first rotating shaft to the second rotating shaft;
a second gear train for transmitting the rotation of the second rotating shaft to the tool rotating shaft;
first and second bearings disposed at a predetermined interval in the front casing to rotatably support the second rotating shaft; and
a third bearing disposed between the first and second bearings.

2. The dental handpiece according to claim 1, wherein
taking the distance between the support points of the second rotating shaft, which distance is defined by the first bearing and the second bearing, as L,
the third bearing is disposed at a position selected from the range of 1/4L to 3/4L from the support point of the first bearing.

3. The dental handpiece according to claim 1 or 2, wherein
the first gear train transmits the rotation of the first rotating shaft to the second rotating shaft so that the rotating speed of the first rotating shaft is reduced; and
the second gear train transmits the rotation of the second rotating shaft to the tool rotating shaft so that the rotating speed of the second rotating shaft is reduced.

4. The dental handpiece according to claim 1, wherein
the third bearing is smaller in size than the first and second bearings.

5. The dental handpiece according to claim 1, wherein
the dental handpiece can be used for an implant drilling system.
